# EUROPÄISCHE PATENTSCHRIFT

(11) **EP 1 692 445 B1**
(45) Veröffentlichungstag und Bekanntmachung des Hinweises auf die Patenterteilung: **11.03.2009**
(21) Anmeldenummer: 04803272.6
(22) Anmeldetag: 25.11.2004
(51) Int. Cl.: F27B 7/20, C04B 7/43

(54) **ANLAGE UND VERFAHREN ZUR THERMISCHEN BEHANDLUNG VON ROHMATERIAL**
SYSTEM AND METHOD FOR THE HEAT TREATMENT OF RAW MATERIAL
INSTALLATION ET PROCEDE DE TRAITEMENT THERMIQUE DE MATERIAU BRUT

(30) Priorität: 12.12.2003 DE 10358317
(43) Veröffentlichungstag der Anmeldung: 23.08.2006
(73) Patentinhaber: POLYSIUS Aktiengesellschaft, 59269 Beckum (DE)
(72) Erfinder: LAMPE, Karl, Johann, 59320 Ennigerloh (DE); PETERWERTH, Bernhard, Josef, 49196 Bad Laer (DE); REICHERT, Thomas, Manfred, 59269 Beckum (DE)
(74) Vertreter: Tetzner, Michael
(86) Internationale Anmeldenummer: PCT/EP2004/013382
(87) Internationale Veröffentlichungsnummer: WO 2005/059460

(56) Entgegenhaltungen:
- EP-A- 0 153 048
- EP-B- 0 880 481
- DE-A1- 3 729 481
- DE-A1- 19 649 922

## Beschreibung

Die Erfindung betrifft eine Anlage sowie ein Verfahren zur thermischen Behandlung von Rohmaterial, insbesondere von Zementrohmaterial.

Bei derartigen Verfahren wird Rohmaterial zunächst vorgewärmt, anschließend vorcalciniert und schließlich gefiltert. Man ist dabei bemüht, einen möglichst hohen Wirkungsgrad bei niedrigen Emissionswerten zu erreichen. Aus der Praxis sind hierfür die unterschiedlichsten Anlagen bekannt.

Vielfach weist dabei die Vorcalcinationsstufe wenigstens eine separate Verbrennungszone sowie eine mit Abgasen des Sinterofens durchströmte Reaktionszone auf , wobei das vorgewärmte Rohmaterial zunächst in der Verbrennungszone unter Zugabe von Brennstoff und Verbrennungsluft vorcalciniert wird.

In der DE-A-196 49 922 und der EP-A-0 153 048 werden Vorrichtungen zur Wärmebehandlung von feinkörnigem Gut beschrieben, die einen Vorcalcinator mit zwei Verbrennzungszonen aufweisen, die beide von den Abgasen eines Drehrohrofens durchströmt werden.

Aus der EP-A-0 754 924 ist eine Anlage zum Calcinieren von Rohmehl in Pulverform bekannt, die eine Verbrennungszone, eine Reaktionszone, eine Kontaktzone sowie eine Nachverbrennungszone umfasst. In der Verbrennungszone wird das Rohmehl zusammen mit der Tertiärluft zugeführt. Außerdem wird im Bereich des Brennerkopfes Brennstoff und weitere Tertiärluft eingespeist. Die Menge der Tertiärluft wird so eingestellt, dass die Verbrennungszone unterstöchiometrisch betrieben wird. Das Rohmehl gelangt aus der Verbrennungszone anschließend in die von den Rauchgasen der Sinterstufe durchströmte Reaktionszone. In der darüber angeordneten Kontaktzone wird weiteres Rohmehls zugeführt, welches zuvor nicht in die Verbrennungszone gelangt ist. In der Nachverbrennungszone wird schließlich nochmals Tertiärluft zugeführt.

Ausgehend von diesem Stand der Technik liegt der Erfindung nun die Aufgabe zugrunde, die Anlage bzw. das Verfahren zur thermischen Behandlung von Rohmaterial dahingehend zu verbessern, dass ein hoher Wirkungsgrad der Vorcalcination bei niedrigen Emissionswerten erreicht werden kann.

Erfindungsgemäß wird diese Aufgabe durch die Merkmale der Ansprüche 1 und 9 gelöst.

Die erfindungsgemäße Anlage zur thermischen Behandlung von Rohmaterial besteht im Wesentlichen aus einer Vorwärmstufe zum Vorwärmen des Rohmaterials, einer Vorcalcinationsstufe zum Vorcalcinieren des vorgewärmten Rohmaterials sowie einer Sinterstufe zum Sintern des vorcalcinierten Rohmaterials, wobei die Vorcalcinationsstufe wenigstens eine separate Verbrennungszone, die nicht von den Abgasen der Sinterstufe durchströmt wird sowie eine mit Abgasen des Sinterofens durchströmte Reaktionszone aufweist, wobei die Verbrennungszone mit der Reaktionszone in Verbindung steht und Mittel zum Zuführen von Brennstoff, erste und zweite Mittel zum Zuführen von Verbrennungsluft sowie Mittel zum Zuführen des vorgewärmten Rohmaterials aufweist. Die separate Verbrennungszone weist dabei eine 1. Brennkammer mit reduzierender Atmosphäre und eine 2. Brennkammer mit oxidierender Atmosphäre auf, wobei zumindest die 1. Brennkammer Mittel zum Zuführen von Brennstoff sowie erste Mittel zum Zuführen von Verbrennungsluft und die 2. Brennkammer zweite Mittel zum Zuführen von Verbrennungsluft sowie Mittel zum Zuführen des vorgewärmten Rohmaterials aufweisen.

Gemäß dem erfindungsgemäßen Verfahren zur thermischen Behandlung von Rohmaterial wird das Rohmaterial in einer Vorwärmstufe vorwärmt, in einer Vorcalcinationsstufe vorcalciniert sowie in einer Sinterstufe gesintert, wobei die Vorcalcinationsstufe eine separate Verbrennungszone, die nicht von den Abgasen der Sinterstufe durchströmt wird sowie eine mit Abgasen des Sinterofens durchströmte Reaktionszone aufweist und das vorgewärmte Rohmaterial in der Verbrennungszone unter Zugabe von Brennstoff und Verbrennungsluft vorcalciniert wird. Die separate Verbrennungszone sieht dabei eine 1. Brennkammer und eine 2. Brennkammer vor, wobei in der 1. Brennkammer durch Zufuhr von Brennstoff und Verbrennungsluft eine reduzierende Atmosphäre erzeugt wird, während in der 2. Brennkammer durch Zufuhr von weiterer Verbrennungsluft eine oxidierende Atmosphäre eingestellt wird und ferner wenigstens ein Teil des vorgewärmten Rohmaterials der 2. Brennkammer zugeführt und dort vorcalciniert wird.

Weitere Ausgestaltungen der Erfindung sind Gegenstand der Unteransprüche.

Durch die Wahl der gestuften Brennkammer kann die Verbrennung bzw. Wärmeerzeugung (1. Brennkammer) von der eigentlichen Calcinierung (2. Brennkammer) getrennt werden. Durch die reduzierende Atmosphäre in der 1. Brennkammer kann die maximale Temperatur herabgesetzt und eine Überhitzung der Brennkammerwände vermeiden werden. Dies ist insbesondere dann sinnvoll, wenn in der 1. Brennkammer eine optimale Verbrennung in staubfreier Atmosphäre gewünscht wird und zudem feste Sekundärbrennstoffe eingesetzt werden sollen.

Durch Verwendung von vorgewärmter Tertiärluft als Verbrennungsluft ist es zudem möglich, den Prozess als flammelose Verbrennung zu betreiben. Der Vorteil einer derartigen Prozessführung liegt darin, dass sich sehr homogene Temperaturverteilungen bei optimierter Verbrennungsführung ergeben.

Darüber hinaus zeichnet sich der Prozess auch durch niedrige Emissionswerte und einen hohen Wirkungsgrad aus.

Die Trennung der Verbrennungszone in eine 1. und 2. Brennkammer hat außerdem den Vorteil, dass die Reaktion der Verbrennungsprodukte beim Eintritt in die 2. Brennkammer schon weit fortgeschritten ist.

In einer weiteren Ausgestaltung der Erfindung ist zwischen der 1. und der 2. Brennkammer ein sich verengender Übergang vorgesehen. Durch diese düsenförmige Einschnürung werden die Verbrennungskomponenten der 1. Brennkammer im Zentrum zusammengeführt, wodurch sich die Reaktionsdichte erhöht. Die erforderliche frische Verbrennungsluft wird wie bei einem Freistrahl aus der Umgebung angesaugt (entrainment). Der vollständige Ausbrand erfolgt im Zentrum der 2. Brennkammer.

Weitere Vorteile und Ausgestaltungen der Erfindung werden im Folgenden anhand der Beschreibung und der Zeichnung näher erläutert.

In der Zeichnung zeigen
- Fig. 1: eine schematische Darstellung einer erfindungsgemäßen Anlage und
- Fig. 2: eine dreidimensionale Darstellung der 1. und 2. Brennkammer.

Die in der Zeichnung dargestellte Anlage zur thermischen Behandlung von Rohmaterial besteht im Wesentlichen aus einer Vorwärmstufe 1 mit mehreren, übereinander angeordneten Zyklonstufen 1a, 1b, 1c, einer Vorcalcinationsstufe 2 sowie einer Sinterstufe 3. Die Vorwärmstufe 1 dient zum Vorwärmen des Rohmaterials und kann auch vier oder mehr Zyklonstufen umfassen. Das vorgewärmte Rohmaterial wird anschließend in der Vorcalcinationsstufe 2 vorcalciniert, bevor es in der Sinterstufe 3 gesintert wird. Das gesinterte Material wird in einer nachgeschalteten Kühlstufe 4 abgekühlt.

Die Vorcalcationsstufe 2 besteht aus einer separaten Verbrennungszone 20 sowie einer mit den Abgasen des Sinterofens 3 durchströmten Reaktionszone 21, wobei die Verbrennungszone mit der Reaktionszone über eine Leitung 22 in Verbindung steht. Die Reaktionszone 21 wird beispielsweise durch eine herkömmliche Steigleitung gebildet, die über einen Umlenkbereich 23 an die unterste Zyklonstufe 1a angeschlossen ist.

Die separate Verbrennungszone 20 umfasst eine 1. Brennkammer 20.1 und eine 2. Brennkammer 20.2. Die 1. Brennkammer 20.1 umfasst ferner eine als Brennerlanze ausgebildete Mittel 20.3 zum Zuführen von Brennstoff sowie erste Mittel 20.4 zum Zuführen von Verbrennungsluft.

Die 2. Brennkammer 20.2 weist zweite Mittel 20.5 zum Zuführen von Verbrennungsluft sowie Mittel 20.6 zum Zuführen des vorgewärmten Rohmaterials auf. Ferner kann im Bereich der 1. Brennkammer 20.1 eine zusätzliche Zuführung 20.7 für die zentrale Aufgabe von festen Sekundärbrennstoffen vorgesehen werden. Weiterhin kann eine Zuführung 20.8 für Kopfluft in der 1. Brennkammer 20.1 münden.

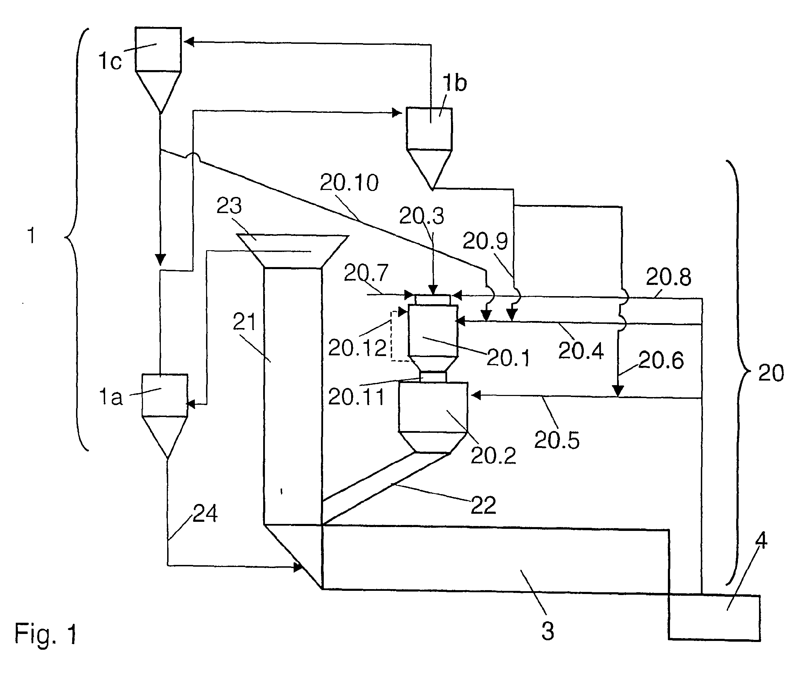

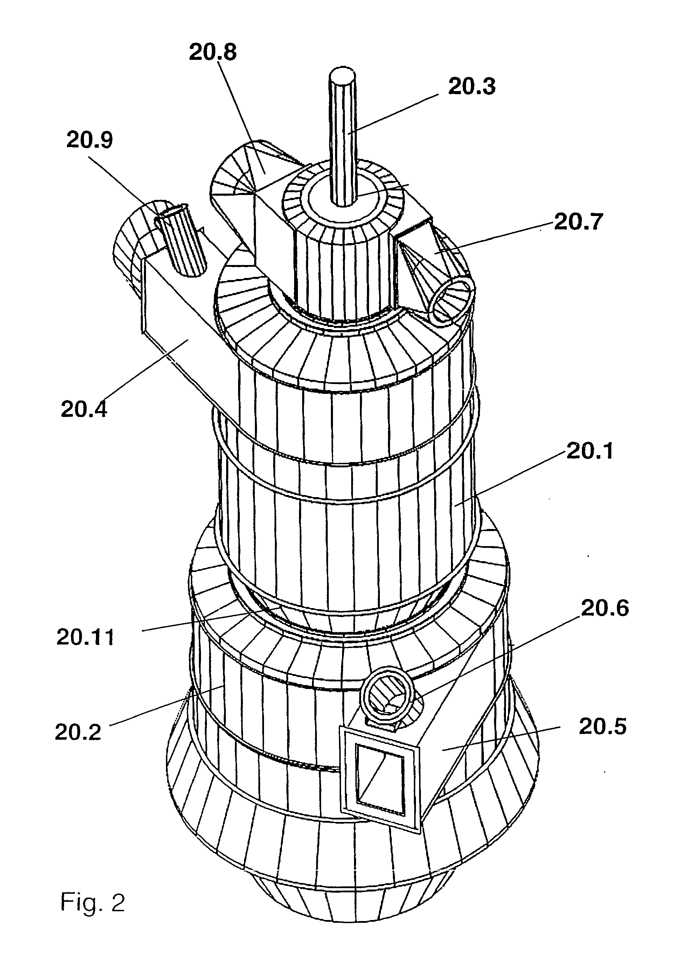

Das über die Mittel 20.6 der 2. Brennkammer 20.2 zugeführte Rohmehl kommt von der Zyklonstufe 1b. Im Bedarfsfall könnte eine kleine Teilmenge auch über Mittel 20.9 der ersten Brennkammer 20.1 zugeführt werden. In Figur 1 ist zudem eine optionale Leitung 20.10 dargestellt, mit der vorgewärmtes Rohmehl aus der dritten Zyklonstufe 1c zur ersten Brennkammer 20.1 geleitet werden kann. Die ersten und zweiten Mittel 20.5 und 20.4 zum Zuführen von Verbrennungsluft sind zweckmäßigerweise so angeordnet, dass die Verbrennungsluft tangential zugeführt wird, wie insbesondere aus Fig. 2 zu ersehen ist. Das zu zuführende Rohmehl wird zweckmäßigerweise zusammen mit der Verbrennungsluft in die Brennkammer eingeführt. Die entsprechenden Mittel 20.6 bzw. 20.9 und 20.10 münden daher kurz vor den Brennkammern in den Mitteln zum Zuführen der Verbrennungsluft.

Zwischen der 1. und 2. Brennkammer 20.1 bzw. 20.2 ist ein sich verengender Übergang 20.11 vorgesehen. Auf diese Weise werden die Verbrennungskomponenten aus der 1. Brennkammer im Zentrum zusammengeführt, wodurch sich die Reaktionsdichte erhöht. In der 2. Brennkammer wird die Verbrennungsluft wie bei einem Freistrahl aus der Umgebung angesaugt. Der vollständige Ausbrand erfolgt dann im Zentrum der 2. Brennkammer.

Im dargestellten Ausführungsbeispiel ist die 1. und 2. Brennkammer rotationssymmetrisch um eine gemeinsame Längsachse ausgebildet. Im Rahmen der Erfindung ist es jedoch auch denkbar, dass die Längsachsen der 1. und 2. Brennkammer einen Winkel von 0° bis 90° zueinander einschließen.

Das Rohmehl wird der Vorwärmstufe 1 im Bereich der obersten Zyklonstufe aufgegeben und gelangt von dort in allgemeiner bekannter Weise bis zur zweiten Zyklonstufe 1b. Das so vorgewärmte Rohmehl gelangt dann über die Mittel 20.6 in die 2. Brennkammer 20.2.

Gemäß einen bevorzugten Ausführungsbeispiel wird das gesamte vorgewärmte Rohmaterial der separaten Verbrennungszone zugeführt. Bei dieser separaten Verbrennungszone handelt es sich um eine Zone, die nicht von den Abgasen der Sinterzone 3 durchströmt wird. Im Bedarfsfall können bis zur 40%, vorzugsweise bis zu 20%, des vorgewärmten Rohmaterials auch der 1. Brennkammer 20.1 zugeführt werden, sodass wenigstens 60%, vorzugsweise wenigstens 80%, des vorgewärmten Rohmaterial in die 2. Brennkammer 20.2 eingeführt werden.

Die Verbrennungsluft wird vorzugsweise durch die Abluft der Kühlstufe 4 gebildet. Die Verbrennung in der 1. Brennkammer 20.1 wird bei Luftzahlen von λ < 0.8, d.h. mit reduzierender Atmosphäre, betrieben. Die 2. Brennkammer 20.2 wird durch die Zufuhr der weiteren Verbrennungsluft mit einer oxidierenden Atmosphäre eingestellt. Eine andere Möglichkeit die Sauerstoffkonzentration der Verbrennungsluft im Bereich der 1. Brennkammer herabzusetzen, besteht in einer inneren oder äußeren Zirkulation, wie dies durch die gestrichelte Linie 20.12 angedeutet ist.

Das vorcalcinierte Rohmehl gelangt über die Leitung 22 in die Reaktionszone 21 und kommt dort mit den Abgasen der Sinterstufe in Kontakt. Im nachfolgenden Zyklon 1a wird das vorcalcinierte Rohmehl vom Abgas getrennt und gelangt über eine Leitung 24 in die Sinterstufe 3, während das Abgas durch die einzelnen Zyklonstufen der Vorwärmstufe 1 geleitet wird. Das gesinterte Material wird schließlich in der Kühlstufe 4 gekühlt, wobei die Abluft des Kühlers als Verbrennungsluft in der Vorcalcinationsstufe 2 genutzt wird.

Die oben beschriebene, gestufte Brennkammer hat den Vorteil, dass die Verbrennung unter kontrollierten Bedingungen bei stark verminderten Maximaltemperaturen ablaufen kann. Dadurch, dass der 1. Brennkammer kein bzw. wenig Rohmehl zugeführt wird, kann die Verbrennung ohne störende Staubfraktionen betrieben werden. Die Verweilzeit für die Verbrennungsprodukte wird gegenüber bisherigen Verfahren erhöht, da die Verweilzeit für die Verbrennungsprodukte größer als für das zu calcinierende Rohmehl ist.

Ein weiterer Vorteil besteht darin, dass im Bereich der 1. Brennkammer in hohem Umfang minderwertige Sekundärbrennstoffe eingesetzt werden können, die dort vor vergasen können.

## Patentansprüche

1. Anlage zur thermischen Behandlung von Rohmaterial mit
a. einer Vorwärmstufe (1) zum Vorwärmen des Rohmaterials,
b. einer Vorcalcinationsstufe (2) zum Vorcalcinieren des vorgewärmten Rohmaterials sowie
c. einer Sinterstufe (3) zum Sintern des vorcalcinierten Rohmaterials,
d. wobei die Vorcalcinationsstufe (2) wenigstens eine separate Verbrennungszone (20), die nicht von den Abgasen der Sinterstufe (3) durchströmt wirdsowie eine mit Abgasen des Sinterofens durchströmte Reaktionszone (21) aufweist, wobei die Verbrennungszone mit der Reaktionszone in Verbindung steht und Mittel (20.3) zum Zuführen von Brennstoff, erste und zweite Mittel (20.4, 20.5) zum Zuführen von Verbrennungsluft sowie Mittel (20.6) zum Zuführen des vorgewärmten Rohmaterials aufweist,
**dadurch gekennzeichnet, dass**
die separate Verbrennungszone eine 1. Brennkammer (20.1) mit reduzierender Atmosphäre und eine 2. Brennkammer (20.2) mit oxidierender Atmosphäre umfasst, wobei zumindest die 1. Brennkammer Mittel zum Zuführen (20.3) von Brennstoff sowie erste Mittel (20.4) zum Zuführen von Verbrennungsluft und die 2. Brennkammer zweite Mittel (20.5) zum Zuführen von Verbrennungsluft sowie Mittel (20.6) zum Zuführen des vorgewärmten Rohmaterials aufweisen.

2. Anlage nach Anspruch 1, **dadurch gekennzeichnet, dass** zwischen der 1. und der 2. Brennkammer ein sich verengender Übergang (20.11) vorgesehen ist.

3. Anlage nach Anspruch 1, **dadurch gekennzeichnet, dass** die ersten Mittel (20.4) zum tangentialen Zuführen der Verbrennungsluft ausgebildet sind.

4. Anlage nach Anspruch 1, **dadurch gekennzeichnet, dass** die zweiten Mittel (20.5) zum tangentialen Zuführen der Verbrennungsluft ausgebildet sind.

5. Anlage nach Anspruch 1, **dadurch gekennzeichnet, dass** die 1. und die 2. Brennkammer (20.1, 20.2) rotationssymmetrisch ausgebildet sind und eine gemeinsame Längsachse aufweisen.

6. Anlage nach Anspruch 1, **dadurch gekennzeichnet, dass** die 1. und die 2. Brennkammer (20.1, 20.2) rotationssymmetrisch ausgebildet sind und die Längsachsen der beiden Brennkammern einen Winkel von 0° bis 90° einschließen.

7. Anlage nach Anspruch 1, **dadurch gekennzeichnet, dass** die 1. Brennkammer zusätzliche Mittel (20.7) zum Zuführen von festen Sekundärbrennstoffen aufweist.

8. Anlage nach Anspruch 1, **dadurch gekennzeichnet, dass** die Vorwärmstufe aus mehreren, übereinander angeordneten Zyklonstufen (1a, 1b, 1c) besteht und ferner Mittel (20.10) zum Zuführen von vorgewärmten Rohmehl von der drittuntersten Zyklonstufe (1c) zur 1. Brennkammer vorgesehen sind.

9. Verfahren zur thermischen Behandlung von Rohmaterial, bei dem das Rohmaterial in einer Vorwärmstufe (1) vorgewärmt, in einer Vorcalcinationsstufe (2) vorcalciniert sowie in einer Sinterstufe (3) gesintert wird, wobei die Vorcalcinationsstufe wenigstens eine separate Verbrennungszone (20), die nicht von den Abgasen der Sinterstufe (3) durchströmt wird sowie eine mit Abgasen des Sinterofens durchströmte Reaktionszone (21) aufweist und das vorgewärmte Rohmaterial in der Verbrennungszone unter Zugabe von Brennstoff und Verbrennungsluft vorcalciniert wird,
**dadurch gekennzeichnet, dass**
die separate Verbrennungszone eine 1. Brennkammer (20.1) und eine 2. Brennkammer (20.2) vorsieht, wobei in der 1. Brennkammer durch Zufuhr von Brennstoff und Verbrennungsluft eine reduzierende Atmosphäre erzeugt wird, während in der unteren Brennkammer durch Zufuhr von weiterer Verbrennungsluft eine oxidierende Atmosphäre eingestellt wird und ferner wenigstens ein Teil des vorgewärmten Rohmaterials der 2. Brennkammer zugeführt und dort vorcalciniert wird.

10. Verfahren nach Anspruch 9, **dadurch gekennzeichnet, dass** das gesamte vorgewärmte Rohmaterial der separaten Verbrennungszone (20) zugeführt wird.

11. Verfahren nach Anspruch 9, **dadurch gekennzeichnet, dass** wenigstens 60%, vorzugsweise wenigstens 80%, des gesamten vorgewärmten Rohmaterials der 2. Brennkammer (20.2) zugeführt wird.

12. Verfahren nach Anspruch 9, **dadurch gekennzeichnet, dass** bis zu 40%, vorzugsweise bis zu 20%, des gesamten vorgewärmten Rohmaterials der 1. Brennkammer (20.1) zugeführt wird.

13. Verfahren nach Anspruch 9, **dadurch gekennzeichnet, dass** als Verbrennungsluft vorgewärmte Tertiärluft aus einer nachgeschalteten Kühlstufe (4) verwendet wird.

14. Verfahren nach Anspruch 9, **dadurch gekennzeichnet, dass** die Verbrennung in der 1. Brennkammer (20.1) bei Luftzahlen von λ < 0.8 betrieben wird.

15. Verfahren nach Anspruch 9, **dadurch gekennzeichnet, dass** die der 1. Brennkammer (20.1) zugeführte Verbrennungsluft zumindest teilweise rezirkuliert und erneut zugeführt wird.

16. Verfahren nach Anspruch 9, **dadurch gekennzeichnet, dass** das vorgewärmte Rohmaterial zusammen mit der Verbrennungsluft der 2. Brennkammer (20.2) zugeführt wird.

## Claims

1. An installation for the thermal treatment of raw material, having
a. a preheating stage (1) for preheating the raw material,
b. a precalcination stage (2) for precalcining the preheated raw material as well as
c. a sintering stage (3) for sintering the precalcined raw material,
d. wherein the precalcination stage (2) comprises at least one separate combustion zone (20), through which the waste gases of the sintering stage (3) do not flow, as well as a reaction zone (21) through which the waste gases of the sintering furnace do flow, the combustion zone being connected to the reaction zone and having means (20.3) for supplying fuel, first and second means (20.4, 20.5) for supplying combustion air and means (20.6) for supplying the preheated raw material,
**characterised in that**
the separate combustion zone comprises a first combustion chamber (20.1) with a reducing atmosphere and a second combustion chamber (20.2) with an oxidising atmosphere, at least the first combustion chamber comprising means (20.3) for supplying fuel as well as first means (20.4) for supplying combustion air and the second combustion chamber comprising second means (20.5) for supplying combustion air as well as means (20.6) for supplying the preheated raw material.

2. An installation according to claim 1, **characterised in that** a narrowing passage (20.11) is provided between the first and the second combustion chamber.

3. An installation according to claim 1, **characterised in that** the first means (20.4) are designed for tangential supply of the combustion air.

4. An installation according to claim 1, **characterised in that** the second means (20.5) are designed for tangential supply of the combustion air.

5. An installation according to claim 1, **characterised in that** the first and second combustion chamber (20.1, 20.2) are of rotationally symmetrical construction and have a common longitudinal axis.

6. An installation according to claim 1, **characterised in that** the first and second combustion chamber (20.1, 20.2) are of rotationally symmetrical construction and the longitudinal axes of the two combustion chambers form an angle of from 0° to 90°.

7. An installation according to claim 1, **characterised in that** the first combustion chamber comprises additional means (20.7) for the supply of solid secondary fuels.

8. An installation according to claim 1, **characterised in that** the preheating stage consists of a plurality of cyclone stages (1a, 1b, 1c) arranged one above the other and additionally means (20.10) are provided for supplying preheated raw mix from the cyclone (1 c) third from bottom to the first combustion chamber.

9. A method for the thermal treatment of raw material, in which the raw material is preheated in a preheating stage (1), is precalcined in a precalcination stage (2) and is also sintered in a sintering stage (3), the precalcination stage comprising at least one separate combustion zone (20), through which the waste gases of the sintering stage (3) do not flow, as well as a reaction zone (21), through which the waste gases of the sintering furnace do flow, and the preheated raw material is precalcined in the combustion zone with the addition of fuel and combustion air,
**characterised in that**
the separate combustion zone provides a first combustion chamber (20.1) and a second combustion chamber (20.2), a reducing atmosphere being created in the first combustion chamber by the supply of fuel and combustion air, whilst an oxidising atmosphere is generated in the lower combustion chamber by the supply of further combustion air, and furthermore at least a part of the preheated raw material is supplied to the second combustion chamber and is precalcined there.

10. A method according to claim 9, **characterised in that** all the preheated raw material is supplied to the separate combustion zone (20).

11. A method according to claim 9, **characterised in that** at least 60%, preferably at least 80%, of all the preheated raw material is supplied to the second combustion chamber (20.2).

12. A method according to claim 9, **characterised in that** up to 40%, preferably up to 20%, of all the preheated raw material is supplied to the first combustion chamber (20.1).

13. A method according to claim 9, **characterised in that** preheated tertiary air from a downstream cooling stage (4) is used as combustion air.

14. A method according to claim 9, **characterised in that** the combustion in the first combustion chamber (20.1) is carried out at air ratios of λ < 0.8.

15. A method according to claim 9, **characterised in that** the combustion air supplied to the first combustion chamber (20.1) is at least partially recirculated and re-supplied.

16. A method according to claim 9, **characterised in that** the preheated raw material is supplied to the second combustion chamber (20.2) together with the combustion air.

## Revendications

1. Installation de traitement thermique de matière première, qui présente :
a. un étage de préchauffage (1) qui préchauffe la matière première,
b. un étage de précalcination (2) qui assure la précalcination de la matière première préchauffée et
c. un étage de frittage (3) qui assure le frittage de la matière première précalcinée,
d. l'étage de précalcination (2) présentant au moins une zone séparée de combustion (20) qui n'est pas traversée par les gaz dégagés par l'étage de frittage (3) ainsi qu'une zone de réaction (21) traversée par les gaz dégagés par le four de frittage, la zone de combustion communiquant avec la zone de réaction et présentant des moyens (20.3) d'amenée de combustible, des premiers et des deuxièmes moyens (20.4, 20.5) d'amenée d'air de combustion et des moyens (20.6) d'amenée de la matière première préchauffée,
**caractérisée en ce que**
la zone séparée de combustion comporte une 1ère chambre de combustion (20.1) à atmosphère réductrice et une 2ème chambre de combustion (20.2) à atmosphère oxydante, au moins la 1ère chambre de combustion présentant des moyens (20.3) d'amenée de combustible ainsi que des premiers moyens (20.4) d'amenée d'air de combustion et la 2ème chambre de combustion présentant des deuxièmes moyens (20.5) d'amenée d'air de combustion ainsi que des moyens (20.6) d'amenée de la matière première préchauffée.

2. Installation selon la revendication 1, **caractérisée en ce qu'**une transition rétrécie (20.11) est prévue entre la 1ère et la 2ème chambre de combustion.

3. Installation selon la revendication 1, **caractérisée en ce que** les premiers moyens (20.4) sont configurés pour amener l'air de combustion tangentiellement.

4. Installation selon la revendication 1, **caractérisée en ce que** les deuxièmes moyens (20.5) sont configurés pour apporter l'air de combustion tangentiellement.

5. Installation selon la revendication 1, **caractérisée en ce que** la 1ère et la 2ème chambre de combustion (20.1, 20.2) présentent une symétrie de rotation et un axe longitudinal commun.

6. Installation selon la revendication 1, **caractérisée en ce que** la 1ère et la 2ème chambre de combustion (20.1, 20.2) présentent une symétrie de rotation et **en ce que** les axes longitudinaux des deux chambres de combustion forment un angle de 0° à 90°.

7. Installation selon la revendication 1, **caractérisée en ce que** la 1ère chambre de combustion présente des moyens supplémentaires (20.7) d'amenée de combustibles secondaires solides.

8. Installation selon la revendication 1, **caractérisée en ce que** l'étage de préchauffage est constitué de plusieurs étages de cyclonage (1a, 1b, 1c) disposés les uns au-dessus des autres et en outre **en ce que** des moyens (20.10) d'amenée de farine brute préchauffée provenant du troisième étage inférieur de cyclonage (1c) dans la 1ère chambre de combustion sont prévus.

9. Procédé de traitement thermique de matière première dans lequel la matière première est préchauffée dans un étage de préchauffage (1), est précalcinée dans un étage de précalcination (2) et est frittée dans un étage de frittage (3), l'étage de précalcination présentant au moins une zone séparée de combustion (20) qui n'est pas traversée par les gaz dégagés par l'étage de frittage (3) et une zone de réaction (21) traversée par les gaz dégagés par le four de frittage, la matière première préchauffée étant précalcinée dans la zone de combustion par apport de combustible et d'air de combustion,
**caractérisé en ce que**
la zone séparée de combustion présente une 1ère chambre de combustion (20.1) et une 2ème chambre de combustion (20.2),
**en ce qu'**une atmosphère réductrice est établie dans la 1ère chambre de combustion par apport de combustible et d'air de combustion tandis qu'une atmosphère oxydante est établie dans la chambre inférieure de combustion par amenée d'un supplément d'air de combustion et
**en ce qu'**en outre au moins une partie de la matière première préchauffée est apportée dans la 2ème chambre de combustion pour y être précalcinée.

10. Procédé selon la revendication 9, **caractérisé en ce que** la totalité de la matière première préchauffée est apportée dans la zone séparée de combustion (20).

11. Procédé selon la revendication 9, **caractérisé en ce qu'**au moins 60 % et de préférence au moins 80 % de la totalité de la matière première préchauffée est amenée dans la deuxième 2ème de combustion (20.2).

12. Procédé selon la revendication 9, **caractérisé en ce que** jusque 40 % et de préférence jusque 20 % de la totalité de la matière première préchauffée est apportée dans la 1ère chambre de combustion (20.1).

13. Procédé selon la revendication 9, **caractérisé en ce que** comme air de combustion, on utilise de l'air tertiaire préchauffé provenant d'un étage de refroidissement (4) situé en aval.

14. Procédé selon la revendication 9, **caractérisé en ce que** la combustion dans la 1ère chambre de combustion (20.1) est conduite à un indice d'air λ < 0,8.

15. Procédé selon la revendication 9, **caractérisé en ce que** l'air de combustion apporté à la 1ère chambre de combustion (20.1) est au moins partiellement recirculé avant d'y être renvoyé.

16. Procédé selon la revendication 9, **caractérisé en ce que** la matière première préchauffée est amenée en même temps que l'air de combustion dans la 2ème chambre de combustion (20.2).
